# FASCICULE DE BREVET EUROPEEN

(11) **EP 3 648 991 B1**
(45) Date de publication et mention de la délivrance du brevet: **10.03.2021**
(21) Numéro de dépôt: 18752811.2
(22) Date de dépôt: 04.07.2018
(51) Int. Cl.: B60C 11/03, B60C 11/12

(54) **PNEU DONT LA BANDE DE ROULEMENT COMPREND DES RAINURES ONDULANTES**
REIFEN DESSEN LAUFFLÄCHE WELLENFÖRMIGE NUTEN AUFWEIST
TIRE COMPRISING A TREAD WITH UNDULATED GROOVES

(30) Priorité: 05.07.2017 FR 1756333
(43) Date de publication de la demande: 13.05.2020
(73) Titulaire: Compagnie Générale des Etablissements Michelin, 63000 Clermont-Ferrand (FR)
(72) Inventeur: ZIVKOVIC, Tony, 63040 Clermont-Ferrand Cedex 9 (FR); GERVAIS, Philippe, 63040 Clermont-Ferrand Cedex 9 (FR); BACHER, Guillaume, 63040 Clermont-Ferrand Cedex 9 (FR)
(74) Mandataire: Millanvois, Patrick Jacques Jean
(86) Numéro de dépôt international: PCT/FR2018/051671
(87) Numéro de publication internationale: WO 2019/008276

(56) Documents cités:
- WO-A1-2011/039194
- WO-A1-2016/188956
- US-A1- 2014 290 814

## Description

### DOMAINE DE L'INVENTION

L'invention concerne les bandes de roulement pour pneus et plus particulièrement les dessins de sculpture de ces bandes ainsi que les pneus pourvus de telles bandes dont les performances en drainage de l'eau sur la chaussée par temps de pluie sont rendues plus pérennes, ces bandes de roulement ayant en outre des performances améliorées en usure.

### ÉTAT DE LA TECHNIQUE

De façon connue, l'utilisation de pneus dans des conditions de roulage par temps de pluie requiert une élimination rapide de l'eau présente dans la région de contact du pneu avec la chaussée afin d'assurer un contact du matériau constituant la bande de roulement avec cette chaussée. L'eau qui n'est pas repoussée sur l'avant du pneu s'écoule ou est captée en partie dans les découpures ou creux formés dans la bande de roulement du pneu.

Ces découpures ou creux forment un réseau d'écoulement qui se doit d'être pérenne c'est-à-dire être efficace pendant toute la durée d'usage d'un pneu entre son état neuf et son retrait pour cause d'usure atteignant une limite fixée par la réglementation.

Pour les pneus destinés aux essieux directeur ou porteur d'un véhicule poids lourd, il est usuel de former, dans la bande de roulement de ces pneus, des rainures circonférentielles (ou rainures longitudinales) dont la profondeur est égale à l'épaisseur totale de la bande de roulement (cette épaisseur totale ne prenant pas en compte l'épaisseur éventuellement prévue pour permettre un renouvellement partiel des rainures par une opération dite de recreusage (« regrooving » en anglais). Ainsi, il est possible d'obtenir une bande de roulement ayant une performance en drainage de l'eau qui est toujours au-dessus d'une performance minimale dite performance de sécurité et cela quel que soit le niveau de l'usure de cette bande.

Pour les pneus de l'état de la technique, le volume total de creux à neuf est en règle générale au moins égal à 10% et au plus égal à 25% du volume total de la bande de roulement destiné à être usé au cours du roulage (le volume total correspondant au volume de matière auquel est ajouté ledit volume total de creux). On constate que ces pneus ont un volume de creux disponible dans l'aire de contact qui est relativement important à l'état neuf (volume de creux disponible signifiant que ce volume est potentiellement susceptible d'être rempli en partie ou en totalité par l'eau présente sur la chaussée). Le volume de creux s'ouvrant sur la surface de roulement dans le contact est évalué lorsque le pneu est soumis à ses conditions usuelles de gonflage et de charge telles que définies notamment par le règlement E.T.R.T.O. pour l'Europe.

Si des découpures ou plus généralement des cavités sont indispensables au drainage de l'eau dans la région de contact avec la chaussée, la diminution de volume de matière qui en résulte sur la bande peut affecter sensiblement la performance en usure de cette bande et en conséquence peut réduire la durée d'utilisation du pneu résultant d'une augmentation de la vitesse d'usure de ladite bande.

Parmi les découpures, on distingue les rainures et les incisions, ces dernières à la différence des rainures, ayant une largeur appropriée pour que les parois en vis-à-vis les délimitant viennent en contact au moins partiellement l'une contre l'autre lors du passage dans le contact. Les rainures génèrent un abaissement des rigidités de compression et de cisaillement puisque ces rainures délimitent des portions de matière sensibles à la déformation comparativement aux portions délimitées par des incisions dont les parois viennent en appui l'une contre l'autre lors du passage dans le contact. Cette diminution de rigidité, dans le cas de la présence de rainures, induit une augmentation des déformations et génère une diminution de la performance en usure de la bande. On observe une usure plus importante pour une distance parcourue fixée et ceci correspond à une augmentation de la vitesse d'usure de la bande. En outre, on constate une augmentation de la résistance au roulement et donc de la consommation des véhicules équipés de tels pneus, résultant d'une augmentation des pertes hystérétiques liées aux cycles de déformations de la matière composant la bande de roulement.

Pour limiter l'abaissement de rigidité liée à la présence des rainures nécessitée par le besoin d'assurer le drainage de l'eau, il a été proposé une solution décrite dans la publication de brevet WO 2011/039194**.** Selon cette solution, il est proposé de former une bande de roulement pour pneu destiné à un véhicule poids lourd, cette bande ayant une épaisseur E et étant pourvue d'une pluralité de rainures ondulantes dans l'épaisseur de la bande, cette rainure ondulante s'ouvrant d'une façon discontinue sur la surface de roulement à neuf. Chaque rainure ondulante présente des cavités externes ouvertes en surface, ces cavités externes étant disjointes les unes des autres dans la direction principale de la rainure ondulante. La direction principale de la rainure ondulante correspond à la direction de l'écoulement de fluide dans la rainure. Cette rainure ondulante comprend outre les cavités externes, une pluralité de cavités internes formées à l'intérieur de la bande de roulement, ces cavités internes étant placées radialement et en totalité à l'intérieur par rapport à la surface de roulement à l'état neuf entre les cavités externes. Les cavités internes peuvent être prévues pour être à différents niveaux de profondeurs dans l'épaisseur de la bande.

En outre, la continuité de l'écoulement d'eau dans chaque rainure ondulante lorsque le pneu est à l'état neuf est assurée par la présence de cavités de liaison ou cavité intermédiaire, chaque cavité de liaison reliant une cavité externe à une cavité interne. Chaque cavité de liaison a deux extrémités, l'une de ces extrémités étant reliée à une cavité interne d'une part et l'autre extrémité étant reliée à une cavité externe d'autre part.

Grâce à la présence de ces cavités de liaison, il est possible, lors d'un roulage sur une chaussée revêtue d'eau, d'assurer une circulation de l'eau d'une cavité externe vers une cavité interne et ainsi d'obtenir un meilleur drainage de l'eau et une meilleure ventilation thermique de la bande de roulement.

De plus grâce à cette structure de bande de roulement, on obtient un volume de creux approprié et diminué par rapport à celui que l'on a avec des rainures ouvertes en totalité sur la surface de roulement. Ce type de rainure ondulante permet de limiter la diminution de rigidité de la bande de roulement à l'état neuf.

Il a été constaté que la présence d'une rainure ondulante pouvait générer une usure irrégulière, c'est à dire une usure localisée sur certaines parties à la différence d'une usure régulière qui affecte de manière uniforme toute la surface de roulement d'une bande. Cette usure irrégulière peut conduire à un retrait prématuré du pneu pour réaliser un rechapage.

De plus, une bande de roulement comprenant des rainures ondulantes est connue par le document WO 2016/188956 A1.

### Définitions :

Chaque cavité externe comprend des parois en vis-à-vis, ces parois étant reliées entre elles par un fond. La distance entre les parois en vis-à-vis définit une largeur maximale de la cavité externe. La distance entre les points du fond les plus à l'intérieur de la bande de roulement et la surface de roulement à neuf définit une profondeur de la cavité externe. Chaque cavité externe a une longueur moyenne mesurée sur son fond selon la direction principale de la rainure ondulante.

La profondeur maximale des cavités internes correspond à la profondeur du fond des cavités internes les plus à l'intérieur mesurée par rapport à la surface de roulement à neuf.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage telles que définies par exemple par l'E.R.T.O..

La direction principale d'une rainure correspond à la direction d'un écoulement d'eau dans la rainure lors d'un roulage sur une chaussée revêtue d'eau.

La surface de roulement d'une bande de roulement correspond à l'ensemble des surfaces élémentaires de la bande pouvant venir en contact avec une chaussée lors du roulage d'un pneu pourvu avec une telle bande de roulement.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

L'épaisseur totale E d'une bande de roulement est mesurée, sur le plan équatorial du pneu pourvu de cette bande, entre la surface de roulement et la partie radialement la plus à l'extérieur de l'armature de sommet à l'état neuf.

Une bande de roulement a une épaisseur maximale de matière à user en roulage, cette épaisseur maximale de matière à user étant inférieure à l'épaisseur totale E.
Les conditions usuelles de roulage du pneu ou conditions d'utilisation sont celles qui sont définies par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSE DE L'INVENTION

Pour résoudre ce problème, l'invention propose une bande de roulement pour pneu de véhicule poids lourd, cette bande de roulement comprenant une surface de roulement destinée à venir en contact avec une chaussée lors du roulage et s'ouvrant sur cette surface de roulement au moins une rainure ondulante, c'est à dire une rainure s'ouvrant d'une façon discontinue sur la surface de roulement à neuf, chaque rainure ondulante présentant des cavités externes ouvertes sur une longueur Le sur la surface de roulement à neuf et de cavités internes ne s'ouvrant pas sur la surface de roulement à neuf, les cavités externes comprenant un fond dont les points les plus à l'intérieur de la bande de roulement sont à une distance H1 de la surface de roulement à neuf, les cavités internes ayant un fond dont les points les plus à l'intérieur sont à une distance H22 de la même surface de roulement, ces cavités externes et ces cavités internes étant reliées entre elles par des cavités de liaison, cette bande de roulement étant caractérisée en ce qu'au moins deux incisions sont formées à partir du fond des cavités externes et sur toute la longueur Le de ces cavités externes, ces incisions ayant des profondeurs (mesurées à partir du fond des cavités externes) au moins égales à 50% (et préférentiellement à au moins 75%) de la différence entre la profondeur maximale du fond des cavités internes et la profondeur des cavités externes (cette dernière profondeur étant mesurée entre la surface de roulement à neuf et le fond de la cavité externe).

Grâce à cette disposition avantageuse, il est possible de réguler les rigidités des éléments de matière de la bande de roulement au voisinage des cavités externes et au voisinage des cavités internes après une usure partielle suffisante pour voir apparaitre sur la surface de roulement les nouvelles rainures formées par les cavités internes.

Selon une autre variante de l'invention, il est formé sur le fond des cavités externes deux incisions distantes l'une de l'autre sur le fond d'une distance égale à la largeur maximale de la cavité externe.

Préférentiellement, les incisions formées sur le fond des cavités externes ont une profondeur au moins égale à la différence entre la profondeur maximale des cavités internes et la profondeur des cavités externes.

Une variante intéressante consiste à incliner l'une par rapport à l'autre les incisions formées sur le fond de chaque cavité externe. Ces incisions sont inclinées de manière à ce que la distance entre ces incisions augmente avec la profondeur.

De façon avantageuse et pour toutes les variantes de l'invention, chaque incision peut se terminer par une cavité d'extrémité de forme appropriée, la largeur maximale de cette cavité d'extrémité étant supérieure à la largeur moyenne de l'incision. Il est notamment possible de générer une cavité d'extrémité se prolongeant latéralement d'un seul côté par rapport à l'incision. Avantageusement, cette cavité n'est pas positionnée radialement sous le fond de la cavité externe. Cette cavité d'extrémité peut être appropriée en géométrie pour générer un assouplissement perceptible et favorable après une usure partielle suffisante.

De façon avantageuse, les incisions formées sur le fond des cavités externes sont également formées sur le fond des cavités de liaison faisant le lien entre cavités externes et cavités internes de manière à avoir une continuité entre le fond de ces incisions et le fond des cavités internes. Le fond des cavités de liaison est continu avec le fond des cavités internes et celui des cavités externes.

À titre de variante d'exécution de l'invention, il est possible de réaliser des configurations non nécessairement symétriques : par exemple les incisions formées à partir du fond des cavités externes peuvent avoir des inclinaisons différentes, les élargissements formés aux extrémités de ces incisions peuvent être également différentes d'un côté par rapport à l'autre.

Dans des variantes intéressantes, les incisions peuvent avoir une géométrie comprenant des moyens de blocage mécanique (par exemple en étant ondulées ou en zigzag dans la profondeur avec des amplitudes adaptées).

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue en coupe d'une première variante rainure ondulante formée dans une bande de roulement selon l'invention ;
La figure 2 montre une vue en coupe de la bande montrée avec la figure 1 selon un plan de coupe dont la trace est repérée par la ligne II-II ;
La figure 3 montre une vue en coupe de la bande montrée avec la figure 1 selon un plan de coupe dont la trace est repérée par la ligne III-III ;
La figure 4 montre une vue en coupe de la bande montrée avec la figure 1 selon un plan de coupe dont la trace est repérée par la ligne IV-IV ;
La figure 5 représente une vue en coupe d'une variante d'une rainure ondulante selon l'invention ;
La figure 6 montre une autre variante de l'invention.

### DESCRIPTION DES FIGURES

Pour faciliter la lecture des figures, des signes de référence identiques sont employés pour la description de variantes de l'invention dès lors que ces signes de référence renvoient à des éléments d'une même nature qu'elle soit structurelle ou bien fonctionnelle.

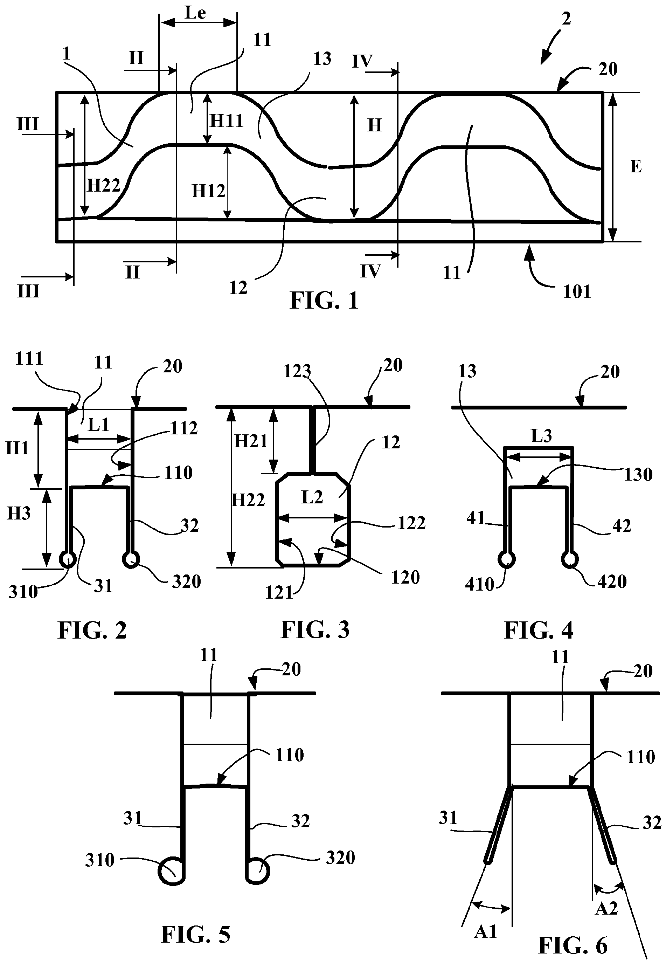

La figure 1 montre en coupe dans un plan perpendiculaire à l'axe de rotation d'un pneu une partie d'une rainure ondulante 1 moulée dans une bande de roulement 2, cette rainure ondulante 1 s'étendant dans la direction circonférentielle. La bande de roulement 2 a une épaisseur E de matière à user.

Cette rainure ondulante 1 comprend une pluralité de cavités externes 11 et une pluralité de cavités internes 12, ces cavités externes et internes étant disposées en alternance dans la direction principale de la rainure ondulante c'est à dire dans la direction de l'écoulement de fluide à l'intérieur de la rainure ondulante (cette direction correspond dans le cas présenté à la direction circonférentielle).

Chaque cavité externe 11 s'ouvre à neuf sur la surface de roulement 20 de la bande de roulement 2, cette surface de roulement 20 correspondant à la surface de la bande de roulement destinée à venir en contact avec la chaussée en roulage. Chaque cavité externe 11 comprend des parois 111, 112 en vis-à-vis distante l'une de l'autre d'une distance L1 appropriée pour qu'il n'y ait pas contact entre ces parois lors du passage dans le contact. Ces parois 111, 112 en vis-à-vis sont reliées l'une à l'autre par un fond de cavité 110, les points de ce fond de cavité les plus à l'intérieur de la cavité externe 11 étant situés à une distance H1 de la surface de roulement 20 à neuf.

Chaque cavité interne 12 a la forme d'un canal entièrement moulé sous la surface de roulement 20 à neuf et est destiné à s'ouvrir sur la surface de roulement après une usure partielle de la bande de roulement. Chaque cavité interne 12 prend naissance à une profondeur H21 et s'étend jusqu'à une profondeur H22, cette dernière profondeur étant au plus égale à l'épaisseur E de matière à user de la bande de roulement. Chaque cavité interne 112 a une largeur maximale L2 mesurée entre ses parois latérales 121, 122 ; cette largeur L2 est, dans le cas présenté, égale à la largeur L1 des cavités externes 11. Le fond 120 de chaque cavité interne 112 est à une profondeur H22 par rapport à la surface de roulement 20 à neuf.

Des cavités de liaisonl3 sont formées entre les cavités externes 11 et les cavités internes 12 de manière à assurer une continuité d'écoulement de fluide dans la rainure ondulante 1 à neuf et cela jusqu'à une usure partielle correspondant à sensiblement la disparition des cavités externes.

En outre, il est formé, sur le fond 110 de chaque cavité externe 11, deux incisions 31, 32 dans le prolongement respectivement des parois 111, 112 en vis-à-vis délimitant cette cavité externe 11. Ces incisions 31, 32 ont une largeur appropriée pour permettre la mise en contact des parois de matière les délimitant lors du passage dans le contact. Ces incisions 31, 32 ont une profondeur H3 telle que leurs points les plus à l'intérieur sont par rapport à la surface de roulement 20 à neuf à une profondeur égale à la profondeur maximale des cavités internes 12.

Dans cette variante, les incisions 31, 32 sont pourvues à leurs extrémités les plus à l'intérieur de la bande de roulement avec des élargissements 310, 320 de section circulaire et de faible volume.

Grâce à cette disposition, il est possible de réguler la rigidité de la bande de roulement au voisinage des cavités internes 12 lorsque les cavités externes 11 sont en voie de disparition après usure partielle et lorsqu'elles ont disparu de la bande de roulement. Ceci est particulièrement favorable pour réduire le risque d'usure irrégulière ce qui en conséquence permet d'éviter un retrait prématuré du pneu.

Sur la figure 3, on montre une coupe transversale de la même rainure ondulante 1 réalisée au niveau d'une cavité interne 12. On voit que la cavité interne 12 s'étend à partir d'une profondeur H21 et jusqu'à une profondeur H22 (profondeur mesurée par rapport à la surface de roulement 20 à neuf). Cette cavité interne 12 a une largeur maximale égale à L2 mesurée entre les parois en vis-à-vis 121, 122 délimitant cette cavité, cette largeur L2 étant dans le cas présenté égale à la largeur L1 des cavités externes 11. Par ailleurs, chaque cavité interne 12 est prolongée par une incision 123 s'ouvrant sur la surface de roulement 20 de la bande de roulement à neuf, cette incision 123 ayant une largeur appropriée pour que les parois en vis-à-vis la délimitant viennent en contact l'une contre l'autre lors au moins partiellement du passage dans le contact avec la chaussée.

Sur la figure 4, on montre une coupe transversale de la même rainure ondulante 1 réalisée au niveau d'une cavité de liaison 13 selon un plan de coupe IV-IV repéré sur la figure 1. Dans cette variante, chaque cavité de liaison 13 est pourvue d'un fond 130, ce fond étant incliné et dans le prolongement d'un côté du fond 110 d'une cavité externe 11 et de l'autre du fond 120 d'une cavité interne 12. Dans la variante présentée, le fond 130 de la cavité de liaison 13 est pourvu avec deux incisions 41, 42 espacées entre elles d'une largeur égale à largeur L3 du fond 130 de la cavité de liaison 13. Ces incisions 41, 42 sont terminées, à leurs extrémités opposées au fond, par des élargissements 410, 420 identiques aux élargissements 310 des incisions 31, 32 formées sur le fond des cavités externes 11. Ces incisions 41, 42, prenant naissance sur le fond de chaque cavité de liaison 13, sont réalisées dans la continuité des incisions 31, 32 formées sur le fond 110 des cavités externes 11.

La figure 5 montre une variante de réalisation de l'invention selon laquelle les incisions 31, 32 formées sur le fond des cavités externes 11 sont pourvues avec une partie élargie formant un canal 310, 320 respectivement, la section transversale de chaque canal 310, 320 étant désaxée par rapport à l'incision à laquelle il est relié de manière à ne pas s'étendre sous le fond 110 de la cavité externe 11. Cette disposition est avantageuse car elle permet de réaliser un assouplissement de part et d'autre de la rainure ondulante 1 au niveau des cavités externes 11 voire aussi des cavités de liaison 13 dès lors que de semblables élargissements sont réalisés aux extrémités des incisions 41, 42 formées sur le fond 130 des cavités de liaison 13.

La figure 6 montre une autre variante de réalisation de l'invention selon laquelle les incisions 31, 32 formées sur le fond 110 des cavités externes 11 sont inclinées par rapport à une direction perpendiculaire à la surface de roulement 20 à neuf. Dans la variante présentée, ces incisions 31, 32 présentent une inclinaison A1, A2 respectivement, telle que chaque incision ne s'étend pas dans la matière radialement sous le fond 110 de la cavité externe 11. Les valeurs des angles A1 et A2 peuvent être choisies dans un domaine allant de 10 degrés à 30 degrés. Au fur et à mesure de l'usure la distance entre les traces des incisions 31, 32 sur la surface de roulement va croissant. Grâce à cet aménagement il est possible d'adapter les rigidités de la bande de roulement au voisinage des cavités externes d'une rainure ondulante.

L'invention concerne également un pneu pourvu d'une bande de roulement telle que décrite et encore plus particulièrement un pneu destiné à équiper un véhicule poids lourd.

Bien entendu, l'invention n'est pas limitée aux exemples décrits et représentés et diverses modifications peuvent y être apportées sans sortir du cadre tel que défini par les revendications. Notamment, chaque variante décrite peut être combinée avec au moins une autre des variantes décrites.

## Revendications

1. Bande de roulement (2) pour pneu, cette bande de roulement comprenant une surface de roulement (20) à neuf destinée à venir en contact avec une chaussée lors du roulage et s'ouvrant sur cette surface de roulement (20) au moins une rainure ondulante (1), c'est à dire une rainure s'ouvrant d'une façon discontinue sur la surface de roulement (20) à neuf, chaque rainure ondulante (1) présentant des cavités externes (11) ouvertes sur une longueur (Le) sur la surface de roulement à neuf et de cavités internes (12) ne s'ouvrant pas sur la surface de roulement à neuf, les cavités externes (11) comprenant un fond (110) dont les points les plus à l'intérieur de la bande de roulement sont à une distance (H1) de la surface de roulement (20) à neuf, les cavités internes (12) ayant un fond (120) dont les points les plus à l'intérieur sont à une distance (H22) de la même surface de roulement (20), ces cavités externes (11) et ces cavités internes (12) étant reliées entre elles par des cavités de liaison (13), cette bande de roulement (2) étant **caractérisée en ce qu'**au moins deux incisions (31, 32) sont formées à partir du fond (110) des cavités externes (11) et sur toute la longueur (Le) de ces cavités externes (11), ces incisions ayant des profondeurs, mesurées à partir du fond (110) des cavités externes (11), au moins égales à 50% de la différence entre la profondeur maximale (H22) du fond (120) des cavités internes (12) et la profondeur (H1) des cavités externes (11).

2. Bande de roulement de pneu selon la revendication 1 **caractérisée en ce que** les incisions (31, 32) formées à partir du fond (110) des cavités externes (11) et sur toute la longueur (Le) de ces cavités externes ont des profondeurs au moins égales à 75% de la différence entre la profondeur maximale (H22) du fond (120) des cavités internes (12) et la profondeur (H1) des cavités externes (11).

3. Bande de roulement de pneu selon la revendication 1 ou la revendication 2 **caractérisée en ce qu'**il est formé sur le fond (110) des cavités externes (11) deux incisions (31, 32) distantes l'une de l'autre sur le fond (110) d'une distance égale à la largeur maximale (L1) de la cavité externe (11).

4. Bande de roulement de pneu selon l'une des revendications 1 à 3 **caractérisée en ce que** les incisions (31, 32) formées sur le fond (110) des cavités externes ont une profondeur au moins égale à la différence entre la profondeur maximale (H22) des cavités internes (12) et la profondeur (H1) des cavités externes (11).

5. Bande de roulement de pneu selon l'une des revendications 1 à 4 **caractérisée en ce que** les incisions (31, 32) formées sur le fond (110) de chaque cavité externe (11) sont inclinées l'une par rapport à l'autre, les inclinaisons de ces incisions (31, 32) étant telles que la distance entre les incisions va croissant avec la profondeur.

6. Bande de roulement de pneu selon l'une des revendications 1 à 5 **caractérisée en ce que** chaque incision (31, 32) se termine par une cavité d'extrémité (310, 320), la largeur maximale de cette cavité d'extrémité (310, 320) étant supérieure à la largeur moyenne de l'incision.

7. Bande de roulement de pneu selon la revendication 6 **caractérisée en ce que** chaque cavité d'extrémité (310, 320) terminant une incision (31, 32) formée sur le fond (110) d'une cavité externe (11) se prolonge latéralement par rapport à l'incision sur laquelle elle est formée pour être positionnée d'un seul côté par rapport à cette même incision.

8. Bande de roulement de pneu selon la revendication 7 **caractérisée en ce que** chaque cavité d'extrémité (310, 320) terminant une incision (31, 32) formée sur le fond (110) d'une cavité externe se prolonge latéralement par rapport à l'incision pour ne pas être positionnée radialement sous le fond (110) de la cavité externe (11).

9. Bande de roulement de pneu selon l'une des revendications 1 à 8 **caractérisée en ce que** des incisions (41, 42) sont formées sur le fond (130) des cavités de liaison (13) entre cavités externes (11) et cavités internes (12) de manière à avoir une continuité entre le fond de ces incisions et le fond des cavités internes.

10. Pneu comprenant une bande de roulement selon l'une des revendications 1 à 9 **caractérisé en ce que** ce pneu est destiné à équiper un véhicule poids lourd.

## Patentansprüche

1. Laufstreifen (2) für Luftreifen, wobei dieser Laufstreifen eine Lauffläche (20) im Neuzustand umfasst, die dazu bestimmt ist, während des Laufs mit einer Straßenoberfläche in Kontakt zu kommen, sowie mindestens eine wellige Nut (1), die in dieser Lauffläche (20) mündet, das heißt eine Nut, die diskontinuierlich in der Lauffläche (20) im Neuzustand mündet, wobei jede wellige Nut (1) äußere Hohlräume (11), die über einer Länge (Le) an der Lauffläche im Neuzustand offen sind, und innere Hohlräume (12), die nicht an der Lauffläche im Neuzustand offen sind, aufweist, wobei die äußeren Hohlräume (11) einen Boden (110) umfassen, dessen am weitesten im Inneren des Laufstreifens liegenden Punkte in einem Abstand (H1) zu der Lauffläche (20) im Neuzustand liegen, wobei die inneren Hohlräume (12) einen Boden (120) haben, dessen am weitesten innen liegenden Punkte in einem Abstand (H22) zu derselben Lauffläche (20) liegen, wobei diese äußeren Hohlräume (11) und diese inneren Hohlräume (12) über Verbindungshohlräume (13) miteinander verbunden sind, wobei dieser Laufstreifen (2) **dadurch gekennzeichnet ist, dass** mindestens zwei Lamelleneinschnitte (31, 32) ausgehend von dem Boden (110) der äußeren Hohlräume (11) und über die gesamte Länge (Le) dieser äußeren Hohlräume (11) ausgebildet sind, wobei diese Lamelleneinschnitte ausgehend von dem Boden (110) der äußeren Hohlräume (11) gemessene Tiefen von mindestens gleich 50% der Differenz zwischen der maximalen Tiefe (H22) des Bodens (120) der inneren Hohlräume (12) und der Tiefe (H1) der äußeren Hohlräume (11) haben.

2. Luftreifenlaufstreifen nach Anspruch 1, **dadurch gekennzeichnet, dass** die Lamelleneinschnitte (31, 32), die ausgehend von dem Boden (110) der äußeren Hohlräume (11) und über die gesamte Länge (Le) dieser äußeren Hohlräume ausgebildet sind, Tiefen von mindestens gleich 75% der Differenz zwischen der maximalen Tiefe (H22) des Bodens (120) der inneren Hohlräume (12) und der Tiefe (H1) der äußeren Hohlräume (11) haben.

3. Luftreifenlaufstreifen nach Anspruch 1 oder Anspruch 2, **dadurch gekennzeichnet, dass** an dem Boden (110) der äußeren Hohlräume (11) zwei Lamelleneinschnitte (31, 32) ausgebildet sind, wobei die Lamelleneinschnitte (31, 32) in dem Boden (110) mit einem Abstand voneinander beabstandet sind, der gleich einer maximalen Breite (L1) des äußeren Hohlraums (11) ist.

4. Luftreifenlaufstreifen nach einem der Ansprüche 1 bis 3, **dadurch gekennzeichnet, dass** die in dem Boden (110) der äußeren Hohlräume ausgebildeten Lamelleneinschnitte (31, 32) eine Tiefe haben, die mindestens gleich der Differenz zwischen der maximalen Tiefe (H22) der inneren Hohlräume (12) und der Tiefe (H1) der äußeren Hohlräume (11) ist.

5. Luftreifenlaufstreifen nach einem der Ansprüche 1 bis 4, **dadurch gekennzeichnet, dass** die in dem Boden (110) jedes äußeren Hohlraums (11) ausgebildeten Lamelleneinschnitte (31, 32) bezüglich einander geneigt sind, wobei die Neigungen dieser Lamelleneinschnitte (31, 32) derart sind, dass der Abstand zwischen den Lamelleneinschnitten mit der Tiefe zunimmt.

6. Luftreifenlaufstreifen nach einem der Ansprüche 1 bis 5, **dadurch gekennzeichnet, dass** jeder Lamelleneinschnitt (31, 32) mit einem Endhohlraum (310, 320) endet, wobei die maximale Breite dieses Endhohlraums (310, 320) größer als die mittlere Breite des Lamelleneinschnitts ist.

7. Luftreifenlaufstreifen nach Anspruch 6, **dadurch gekennzeichnet, dass** sich jeder Endhohlraum (310, 320), in dem ein in dem Boden (110) eines äußeren Hohlraums (11) ausgebildeter Lamelleneinschnitt (31, 32) endet, bezüglich des Lamelleneinschnitts, an dem er ausgebildet ist, seitlich fortsetzt, so dass er nur an einer Seite bezüglich desselben Lamelleneinschnitts positioniert ist.

8. Luftreifenlaufstreifen nach Anspruch 7, **dadurch gekennzeichnet, dass** sich jeder Endhohlraum (310, 320), in dem ein in dem Boden (110) eines äußeren Hohlraums ausgebildeter Lamelleneinschnitt (31, 32) endet, bezüglich des Lamelleneinschnitts seitlich fortsetzt, so dass er nicht radial unter dem Boden (110) des äußeren Hohlraums (11) positioniert ist.

9. Luftreifenlaufstreifen nach einem der Ansprüche 1 bis 8, **dadurch gekennzeichnet, dass** Lamelleneinschnitte (41, 42) so in dem Boden (130) der Verbindungshohlräume (13) zwischen äußeren Hohlräumen (11) und inneren Hohlräumen (12) ausgebildet sind, dass eine Kontinuität zwischen dem Boden dieser Lamelleneinschnitte und dem Boden der inneren Hohlräume besteht.

10. Luftreifen, umfassend einen Laufstreifen nach einem der Ansprüche 1 bis 9, **dadurch gekennzeichnet, dass** dieser Luftreifen zur Ausrüstung eines Lastkraftwagens bestimmt ist.

## Claims

1. Tread (2) for a tyre, this tread comprising a tread surface (20) in the new state that is intended to come into contact with a road surface during running and, opening onto this tread surface (20), at least one wavy groove (1), that is to say a groove that opens discontinuously onto the tread surface (20) in the new state, each wavy groove (1) having external cavities (11) that open onto the tread surface in the new state along a length (Le) and internal cavities (12) that do not open onto the tread surface in the new state, the external cavities (11) comprising a bottom (110) of which the points that are innermost in the tread are at a distance (H1) from the tread surface (20) in the new state, the internal cavities (12) having a bottom (120) of which the innermost points are at a distance (H22) from the same tread surface (20), these external cavities (11) and these internal cavities (12) being connected together by linking cavities (13), this tread (2) being **characterized in that** at least two sipes (31, 32) are formed from the bottom (110) of the external cavities (11) and along the entire length (Le) of these external cavities (11), these sipes having depths, measured from the bottom (110) of the external cavities (11), at least equal to 50% of the difference between the maximum depth (H22) of the bottom (120) of the internal cavities (12) and the depth (H1) of the external cavities (11).

2. Tyre tread according to Claim 1, **characterized in that** the sipes (31, 32) formed from the bottom (110) of the external cavities (11) and along the entire length (Le) of these external cavities have depths at least equal to 75% of the difference between the maximum depth (H22) of the bottom (120) of the internal cavities (12) and the depth (H1) of the external cavities (11).

3. Tyre tread according to Claim 1 or Claim 2, **characterized in that** two sipes (31, 32) are formed in the bottom (110) of the external cavities (11), said sipes (31, 32) being spaced apart in the bottom (110) by a distance equal to the maximum width (L1) of the external cavity (11).

4. Tyre tread according to one of Claims 1 to 3, **characterized in that** the sipes (31, 32) formed in the bottom (110) of the external cavities have a depth at least equal to the difference between the maximum depth (H22) of the internal cavities (12) and the depth (H1) of the external cavities (11).

5. Tyre tread according to one of Claims 1 to 4, **characterized in that** the sipes (31, 32) formed in the bottom (110) of each external cavity (11) are inclined with respect to one another, the inclinations of these sipes (31, 32) being such that the distance between the sipes increases with depth.

6. Tyre tread according to one of Claims 1 to 5, **characterized in that** each sipe (31, 32) ends in an end cavity (310, 320), the maximum width of this end cavity (310, 320) being greater than the mean width of the sipe.

7. Tyre tread according to Claim 6, **characterized in that** each end cavity (310, 320) that ends a sipe (31, 32) formed in the bottom (110) of an external cavity (11) is continued laterally with respect to the sipe on which it is formed in order to be positioned on only one side with respect to this same sipe.

8. Tyre tread according to Claim 7, **characterized in that** each end cavity (310, 320) that ends a sipe (31, 32) formed in the bottom (110) of an external cavity is continued laterally with respect to the sipe in order not to be positioned radially under the bottom (110) of the external cavity (11).

9. Tyre tread according to one of Claims 1 to 8, **characterized in that** sipes (41, 42) are formed in the bottom (130) of the connecting cavities (13) between external cavities (11) and internal cavities (12) so that there is continuity between the bottom of these sipes and the bottom of the internal cavities.

10. Tyre comprising a tread according to one of Claims 1 to 9, **characterized in that** this tyre is intended to be fitted to a heavy-duty vehicle.
